# EUROPÄISCHE PATENTSCHRIFT

(11) **EP 2 208 901 B1**
(45) Veröffentlichungstag und Bekanntmachung des Hinweises auf die Patenterteilung: **02.11.2011**
(21) Anmeldenummer: 10150602.0
(22) Anmeldetag: 13.01.2010
(51) Int. Cl.: F16C 29/04, F16C 33/40, F16C 33/48, A47B 88/04

(54) **Wälzkörperkäfig für eine Möbelauszugsführung und Verfahren zur Montage eines Wälzkörperkäfigs**
Roller body cage for a furniture pull-out guide and method for fitting a roller body cage
Cage d'élément roulant pour un guidage d'extraction de meuble et procédé de montage d'une cage d'élément roulant

(30) Priorität: 20.01.2009 DE 102009003364
(43) Veröffentlichungstag der Anmeldung: 21.07.2010
(73) Patentinhaber: Paul Hettich GmbH & Co. KG, 32278 Kirchlengern (DE)
(72) Erfinder: Hoffmann, Andreas, 32257 Bünde (DE); Klaus, Stefan, 32257 Bünde (DE); Gaede, Christian, 32278 Kirchlengern (DE); Stein, Bastian, 49080 Osnabrück (DE)
(74) Vertreter: Dantz, Jan Henning

(56) Entgegenhaltungen:
- DE-U- 6 932 518
- GB-A- 2 061 702
- US-A- 4 701 059
- US-A- 5 018 879
- US-A1- 2006 186 302
- US-B1- 7 104 692

## Beschreibung

Die vorliegende Erfindung betrifft einen Wälzkörperkäfig für eine Möbelauszugsfühnmg gemäß dem Oberbegriff des Anspruchs 1 sowie ein Verfahren zur Montage eines Wälzkörperkäfigs auf ein Auszugsführungsschienenprofil gemäß dem Oberbegriff des Anspruchs 11.

Die aus dem Stand der Technik bekannten und derzeit eingesetzten Wälzkörperkäfige für Möbelauszugsführungen bestehen im Wesentlichen aus einteiligen gespritzten Kunststoffkäfigkörpern, bei denen vormontierte Wälzkörper von Wälzkörperhalterungen umschlossen sind oder aus einteiligen Metallkäfigkörpern mit vormontierten Wälzkörperteilen umschließenden Wälzkörperhalterungen in Laufrichtung des aus Wälzkörperkäfig und darin montierten Wälzkörper bestehenden Laufwagens.

Aus dem Dokument US 2006/0186302 A1 ist ein Walzkörperkäfig nach dem Oberbegriff des Anspruchs 1 bekannt.

Nachteilig bei den heutigen mit Wälzkörpern vorbestückten Wälzkörperkäfigen ist, dass für die Herstellung der Kunststoffwälzkörperkäfige aufwendige Werkzeuge mit zwangsentformten Kernen erforderlich sind, was zu hohen Kosten, großen Prozesstoleranzen und einer geringen Wiederholgenauigkeit führt.

Als Herstellungsalternative kann auch der Wälzkörper selbst umspritzt werden, wobei durch Abschrumpfen beim Auskühlen des Wälzkörperkäfigmaterials sich der Wälzkörper vom Wälzkörperkäfig unter Spaltbildung löst. Aufgrund des geringen Spaltmaßes zwischen der Wälzköperhalterung und dem Wälzkörper kann jedoch ein auf den Wälzkörpern befindlicher Schmierfilm leicht abreißen und zu einer Mangelschmierung, einem vorzeitigen Verschleiß der Wälzkörperhalterung sowie Verschmutzung der Laufbahn einer Möbelauszugsführung durch Verschleißpartikel führen.

Bei vorbestückten metallischen Wälzkörperkäfigen wird die Wälzkörperhalterung quer zur Laufrichtung aus dem Grundmaterial des Wälzkörperkäfigs herausgestellt und die Wälzkörper in Bohrungen oder runden Vertiefungen von Seitenwänden des Wälzkörperkäfigs gehalten. Nachteilig ist auch hier die Anlagefläche des Wälzkörperkäfigs im Laufbereich des Wälzkörpers, die zu einem Abreißen des Schmierfilms und einem daraus resultierenden abrasiven Verschleiß der Wälzkörperhaltemngen führen kann.

Aufgabe der vorliegenden Erfindung ist es daher, einen Wälzkörperkäfig sowie ein Verfahren zur Montage eines solchen Wälzkörperkäfigs zu schaffen, mit dem die oben genannten Nachteile beseitigt werden und insbesondere die Aufnahme von Wälzkörpern in Wälzkörperkäfigen zu optimieren.

Diese Aufgabe wird durch einen Wälzkörperkäfig mit den Merkmalen des Anspruchs 1 sowie durch ein Verfahren zur Montage eines Wälzkörperkäfigs mit den Merkmalen des Anspruchs 11 gelöst.

Vorteilhafte Weiterbildungen sind Gegenstand der Unteransprüche.

Erfindungsgemäß sind an den Wälzkörperführungen des Wälzkörperkäfigs Haltenmgen vorgesehen, die derart angeformt sind, dass in einer planen Montagestellung des Wälzkörperkäfigs Wälzkörper in die Halterungen der Wälzkörperführungen einpressbar sind. Dadurch ist eine wesentliche Vereinfachung der Herstellung solcher aus Wälzkörpern und Wälzkörperkäfigen bestehenden Laufwagen ermöglicht. Die Wälzkörper sind dadurch exakt positionierbar, sodass die Prozesstoleranzen wesentlich vermindert sind. Außerdem kann die Bestückung solcher Wälzkörperkäfige mit einfachen Werkzeugen durchgeführt werden.

Erfindungsgemäß sind die Halterungen des Wälzkörperkäfigs kalottenförmig ausgebildet. Dadurch ist zum einen eine exakte Führung der Wälzkörper ermöglicht, wobei zwischen Wälzkörper und Wälzkörperführung beziehungsweise Halterung ein ausreichendes Spiel vorgesehen ist, sodass ein Abreißen eines Schmierfilms und damit ein abrasiver Verschleiß des Wälzkörpers beziehungsweise der Wälzkörperführung oder der Halterung wirksam verhindert ist.

Erfindungsgemäß sind die Halterungen und/oder die Wälzkörperführungen mit Nuten und/oder Kammern ausgebildet, in denen ein an den Wälzkörpern anhaftende Schmierstoff lagerbar und zwischen der Außenseite und der Innenseite des Wälzkörperkäfigs übertragbar ist. Dadurch kann sich der am Wälzkörper befindliche Schmierstoff frei zwischen den Laufbahnen einer Möbelauszugsführung bewegen, sodass bei einem eventuell auftretenden Schmierstoffmangel auf einer der Laufbahnen über den Wälzkörper der Schmierstoff von einer Laufbahnseite der Auszugsführungsschiene auf die gegenüberliegende übertragen werden kann.

Gemäß dem erfindungsgemäßen Verfahren werden zunächst Wälzkörper auf den in der Montagestellung planen Wälzkörperkäfig ausgebracht, die Wälzkörper anschließend auf den mit Halterungen versehenen Wälzkörperführungen platziert, die Wälzkörper sodann in die Wälzkörperführungen eingepresst und schließlich der mit Wälzkörpern bestückte Wälzkörperkäfig auf ein Auszugsführungsschienenprofil durch Umklappen und Verrasten der Seitenwände des Wälzkörperkäfigs montiert. Mit einem solchen Verfahren ist eine einfache Bestückung des Wälzkörperkäfigs mit Wälzkörpern mit einfachen Werkzeugen ermöglicht. Durch die faltbare und arretierbare Ausführung des Wälzkörperkäfigs ist zudem eine einfache Montage des Wälzkörperkäfigs auf ein Auszugsführungsschienenprofil einer Möbelauszugsführung gegeben.

Insbesondere die Nutzung einer Rakel zum Aufbringen eines Schmierstoffes auf den planen Wälzkörperkäfig beziehungsweise das Platzieren der Wälzkörper durch Abziehen des planen Wälzkörperkäfigs mit der Rakel beziehungsweise das Entfernen überschüssiger Wälzkörper von dem planen Wälzkörperkäfig durch Abziehen mit der Rakel stellt einen einfachen und kostengünstigen Verfahrensschritt dar.

Erfindungsgemäß wird der Schmierstoff mit der Rakel vor dem Platzieren der Wälzkörper aufgebracht, um auch die Wälzkörperaufnahmen mit Schmierstoff zu füllen. Somit bildet sich beim Einpressen der Wälzkörper ein Schmierfilm zwischen den Wälzkörperaufnahmen und den Wälzkörpern aus. Einem Abriss des Schmierfilms wird somit vorgebeugt. Die Rakel kann so angesteuert werden, dass die Schmierstoffmenge variiert werden kann, somit kann der Schmierstoff gezielt an die Schmierstellen gelangen. Einer Überdosierung von Schmierstoff und daraus folgenden hohen Schmierstoffkosten wird somit vorgebeugt.

Die Erfindung wird nachfolgend anhand von Ausführungsbeispielen mit Bezug auf die beigefügten Zeichnungen näher erläutert.

Es zeigen:
- Figuren 1 bis 4: eine erste Ausführungsform eines erfindungsgemäßen Wälz- körperkäfigs in unterschiedlichen schematischen Ansichten,
- Figuren 5 und 6: eine zweite Ausführungsform eines erfindungsgemäßen Wälzkörperkäfigs in unterschiedlichen schematischen An- sichten,
- Figuren 7 bis 10: eine weitere Ausführungsform eines erfindungsgemäßen Wälzkörperkäfigs in unterschiedlichen schematischen An- sichten,
- Figuren 11 bis 14: eine weitere Ausführungsform eines erfindungsgemäßen Wälzkörperkäfigs in unterschiedlichen schematischen An- sichten,
- Figuren 15 bis 18: eine weitere Ausführungsform eines erfindungsgemäßen Wälzkörperkäfigs in unterschiedlichen schematischen An- sichten,
- Figuren 19 bis 23: eine weitere Ausführungsform eines erfindungsgemäßen Wälzkörperkäfigs in unterschiedlichen schematischen An- sichten,
- Figur 24: eine perspektivische Ansicht eines planen Wälzkörperkäfigs und einer Rakel zur Verdeutlichung des erfindungsgemäßen Verfahrens,
- Figur 25: eine Draufsicht auf den planen Wälzkörperkäfig und die Ra- kel aus Figur 24,
- Figur 26: eine perspektivische Ansicht des planen Wälzkörperkäfigs und der Rakel beim Aufbringen eines Schmierstoffes auf den Wälzkörperkäfig,
- Figur 27: eine Detailansicht der in Figur 26 dargestellten Schmier- stoffaufbringung,
- Figuren 28 und 29: den Figuren 26 und 27 entsprechende Ansichten mit einge- pressten Wälzkörpern.

In den nachfolgenden Figurenbezeichnungen beziehen sich Begriffe wie oben, unten, links, rechts, vorne, hinten usw. ausschließlich auf die jeweiligen in den Figuren gewählten beispielhaften Darstellungen und Positionen des Wälzkörperkäfigs und anderer Gegenstände. Diese Begriffe sind nicht einschränkend zu verstehen, d. h. in verschiedenen Arbeitsstellungen oder durch spiegelsymmetrische Auslegung oder dergleichen können sich diese Bezüge ändern.

Ein Wälzkörperkäfig für eine Möbelauszugsführung ist zwischen zwei zueinander verfahrbaren Schienen der Möbelauszugsführung angeordnet, wobei in dem Wälzkörperkäfig eine Vielzahl von Wälzkörpern, vorzugsweise in Gestalt von Kugeln oder Zylindern, geführt sind, um die eine Schiene an der anderen Schiene verfahrbar zu führen.

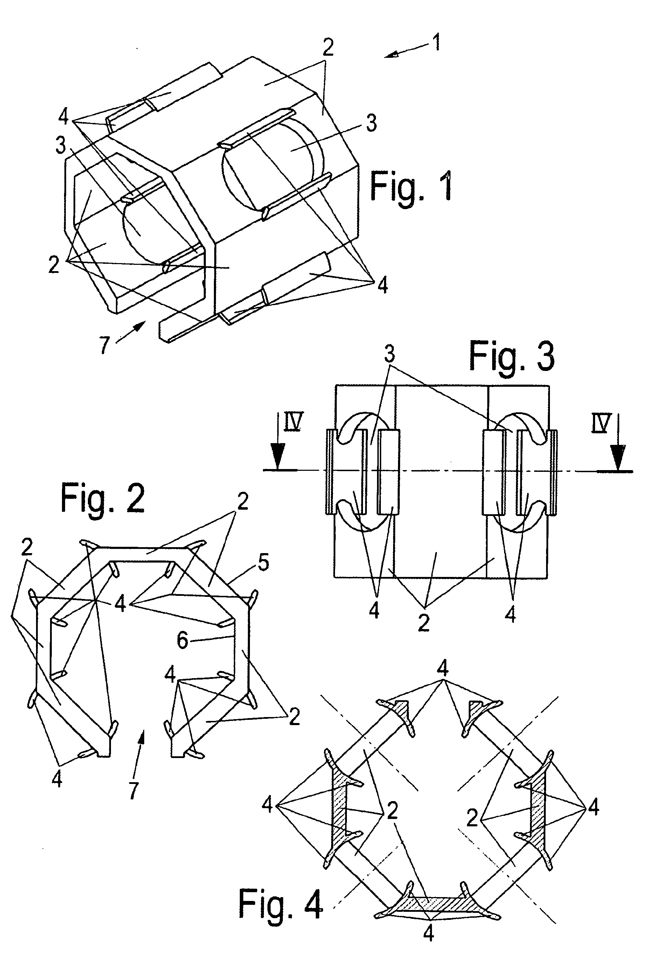

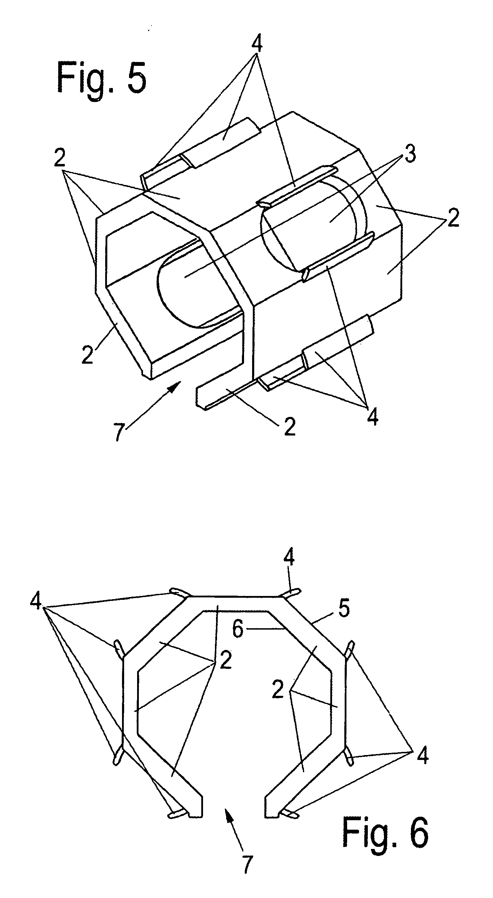

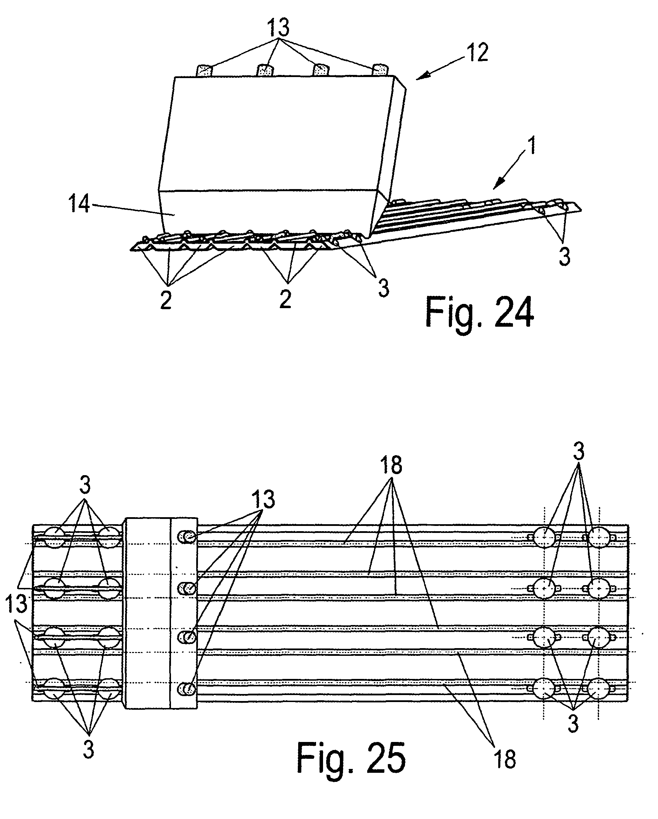

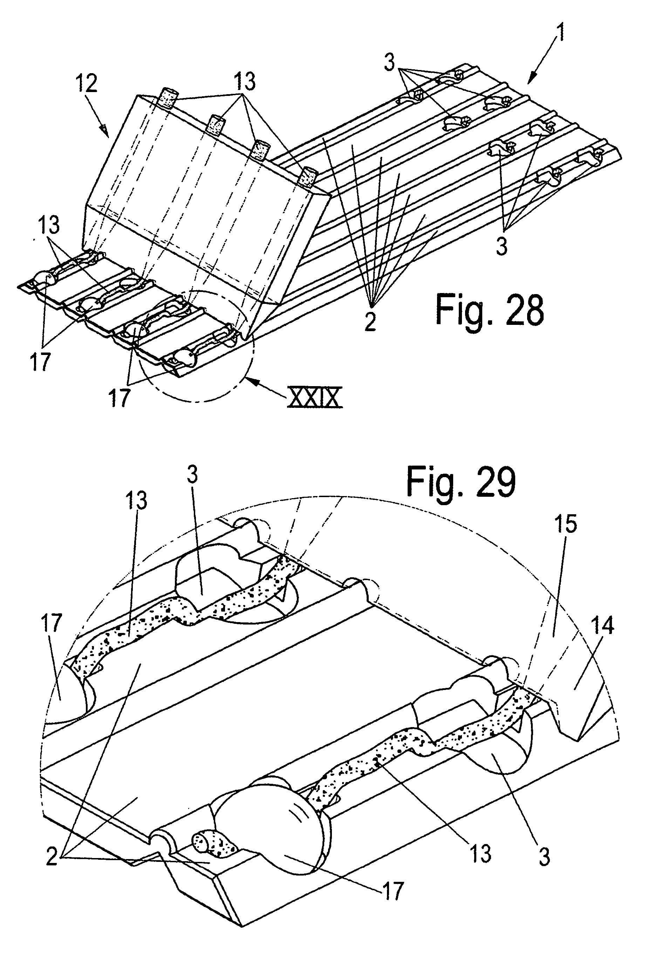

Die Figuren 1 bis 4 zeigen eine erste Ausführungsform eines Wälzkörperkäfigs 1 zur Aufnahme von bevorzugt kugelförmigen Wälzkörpern (hier nicht gezeigt), der mehrere Seitenwände 2 aufweist, die entlang ihrer Längskanten durch Biegebereiche 18 (gezeigt in Figur 25) miteinander verbunden sind. Die hier und auch in den Figuren 5 bis 23 gezeigten Ausführungsvarianten des Wälzkörperkäfigs 1 zeigen den Wälzkörperkäfig 1 in seiner in eine Funktionsstellung gefalteten Position. In einem Teil der Seitenwände 2 sind Wälzkörperführungen 3 in Form von Aussparungen vorgesehen, in denen (wie in den Figuren 28 und 29 gezeigt) Wälzkörper 17 lagerbar sind. Der in seiner Funktionsstellung im Querschnitt (siehe beispielsweise Figur 2) zu einem offenen Polygon gefaltete Wälzkörperkäfig weist einen Spalt 7 auf, durch den im an einer Möbelauszugsführungsschiene montierten Zustand des Wälzkörperkäfigs die Möbelauszugsführungsschiene hindurchgreift.

Wie in den Figuren 1 und 3 erkennbar, sind an dem Wälzkörperführungen 3 Halterungen 4 vorgesehen, die derart angeformt sind, dass in einer in den Figuren 24 bis 29 gezeigten planen Montagestellung des Wälzkörperkäfigs 1 Wälzkörper 17 in die Halterungen 4 der Wälzkörperführungen 3 einpressbar sind.

Die Halterungen 4 sind in dieser Ausführungsvariante schalenartig geformt und stehen aus einem Randabschnitt der Wälzkörperführungen 3 längs zur Laufbahn einer Möbelauszugsführung hervor. Die Halterungen 4 stehen in dieser Ausführungsvariante sowohl aus einer Außenseite 5 des Wälzkörperkäfigs 1 als auch aus einer Innenseite 6 des Wälzkörperkäfigs 1 hervor. Denkbar ist auch, dass die Halterungen 4 nur aus der Außenseite 5, wie in den Figuren 5 und 6 gezeigt, oder der Innenseite 6 des Wälzkörperkäfigs 1 hervorstehen.

Wie in Figur 4, einer Schnittansicht durch einen in Figur 3 mit IV bezeichneten Schnitt, gezeigt ist, sind die Halterungen 4 einstückig mit den jeweiligen Seitenwänden 2 ausgebildet und zur Wälzkörperführung 3 hin kalottenförmig angeformt.

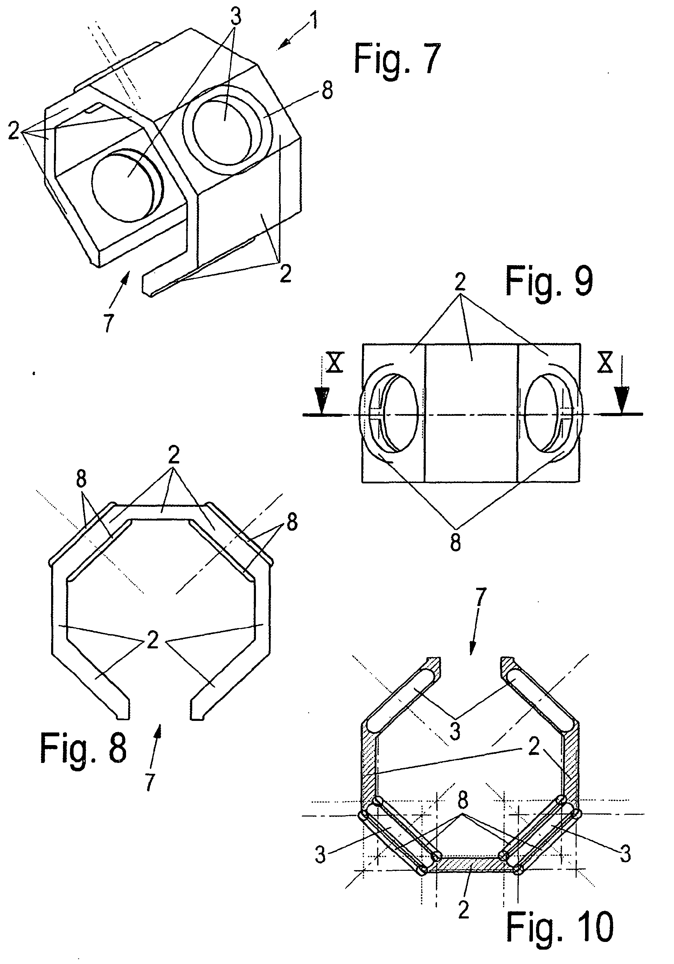

Die Figuren 7 bis 10 zeigen eine weitere Ausführungsform des Wälzkörperkäfigs 1, bei dem die Halterungen 8 als ringförmige Wulst ausgebildet sind. Auch bei dieser Ausführungsvariante ist sowohl eine Variante denkbar, bei der die als ringförmige Wulst ausgebildete Halterung 8 nur an einer Seite der Seitenwände 2, beispielsweise der Außenseite 5, oder auch an beiden Seiten 5, 6 ausgebildet ist.

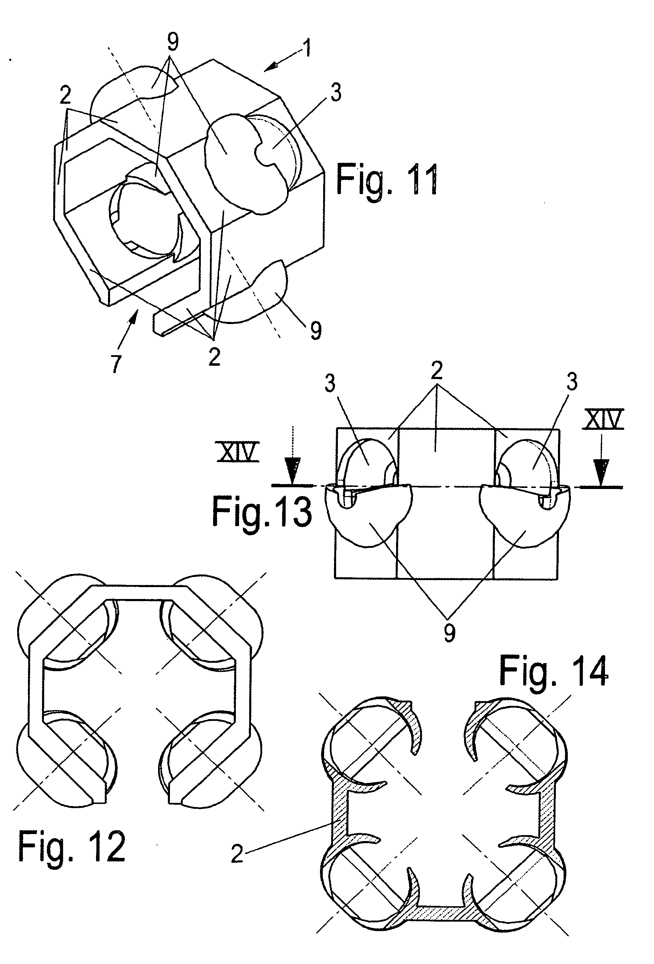

Die Figuren 11 bis 14 zeigen eine Ausführungsform des Wälzkörperkäfigs 1, bei der die Halterungen 9 taschenartig ausgebildet sind. In der hier gezeigten Variante sind die Taschen quer zur Laufbahn einer Möbelauszugsführungsschiene an den Seitenwänden 2 des Wälzkörperkäfigs 1 angeordnet und umfassen den aus der Wälzkörperführung 3 im montierten Zustand hervorstehenden Teil des Wälzkörpers nahezu hälftig.

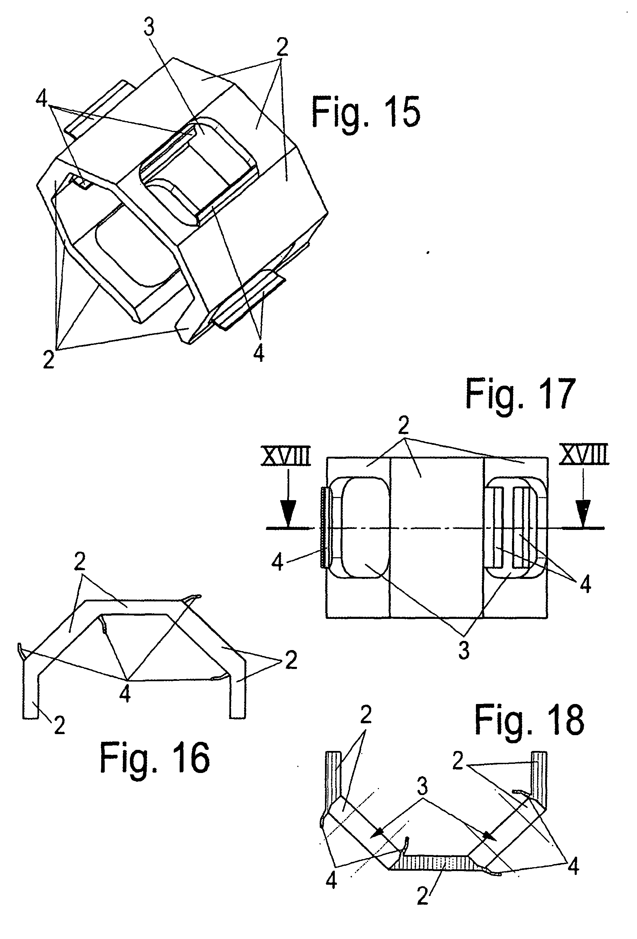

Bei der in den Figuren 15 bis 18 gezeigten Ausführungsvariante des Wälzkörperkä- figs 1 sind nur einseitig Halterungen 4 an den Randabschnitten der Wälzkörperführung 3 vorgesehen, wobei unter einseitig hier zu verstehen ist, dass aus einem Randabschnitt einer Wälzkörperführung 3 jeweils nur eine Halterung 4 aus einer Außenseite 5 und einer Innenseite 6 des Wälzkörperkäfigs hervorsteht. In der hier gezeigten Ausführungsvariante sind die Halterungen 4 dabei zueinander versetzt an gegenüberliegenden Randabschnitten der Wälzkörperführung 3 positioniert.

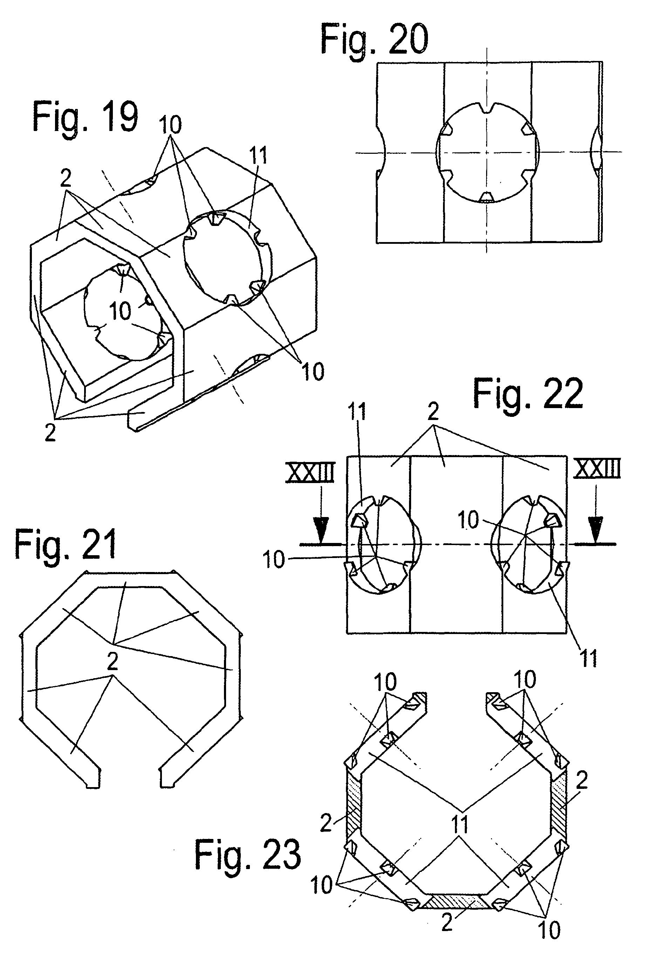

Die Figuren 19 bis 23 zeigen eine weitere Ausführungsvariante des Wälzkörperkä- figs 1, bei dem die Halterungen 10 nicht aus der Außen- bzw. Innenseite 5, 6 der Seitenwände 2 des Wälzkörperkäfigs 1 herausstehen, sondern als in der Laibung 11 der Wälzkörperführung 3 versetzt zueinander angeordnete Nasen ausgebildet sind.

Diese Nasen 10 sind von etwa pyramidenförmiger Gestalt mit abgeflachten, ins Zentrum der Wälzkörperführung 3 zeigenden Spitzen ausgebildet. Bevorzugt sind in jeder der Wälzkörperführungen 3 sechs solcher Nasen 10 angeordnet, wobei die Spitzen dieser Nasen abwechselnd parallel zur Außenseite 5 und zur Innenseite 6 des Wälzkörperkäfigs 1 ausgerichtet sind.

Die Bestückung und Montage eines solchen im Vorstehenden beschriebenen Wälzkörperkäfigs 1 wird nun anhand der Figuren 24 bis 29 beschrieben. Die Figur 24 zeigt einen Wälzkörperkäfig 1 in seiner planen Montagestellung sowie eine Rakel 12, die über die Wälzkörperkäfigfläche verfahrbar angeordnet ist. Die Rakel 12 weist im hier gezeigten Ausführungsbeispiel vier Kanäle 15 zum Aufbringen eines Schmierstoffes 13 auf den Wälzkörperkäfig 1 auf, wobei die Anzahl und Abstände der Kanäle generell an die Anzahl und Abstände der parallel zueinander angeordneten Reihen von mit Wälzkörperführungen 3 versehenen Seitenwände 2 angepasst ist.

Zur Bestückung des Wälzkörperkäfigs 1 werden zunächst Wälzkörper 17 auf den in der Montagestellung planen Wälzkörperkäfig 1 aufgebracht. Anschließend werden die Wälzkörper 17 auf den mit Halterungen 4, 8, 9, 10 versehenen Wälzkörperführungen 3 platziert. In einem weiteren Schritt werden die Wälzkörper 17 in die Wälzkörperführungen 3 eingepresst und schließlich wird der mit den Wälzkörpern 17 bestückte Wälzkörperkäfig 1 auf ein Auszugsführungsschienenprofil montiert. Dazu werden die Seitenwände 2 des Wälzkörperkäfigs 1 um das Auszugsführungsschienenprofil herum umgeklappt und anschließend verrastet.

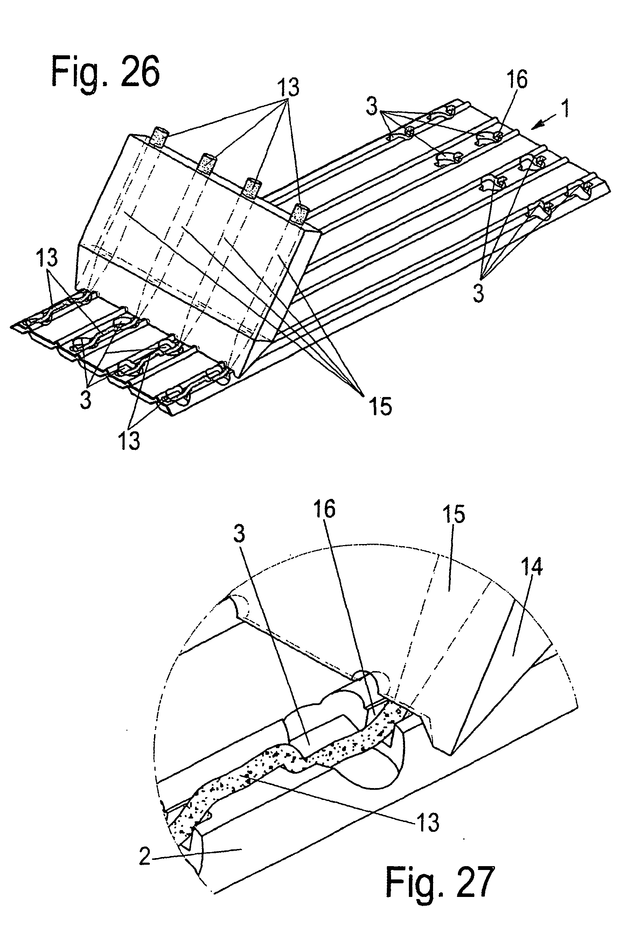

In einem weiteren Verfahrensschritt wird ein Schmierstoff 13 auf den planen Wälzkörperkäfig 1 aufgebracht. Dies erfolgt bevorzugt durch die Rakel 12, wie es in den Figuren 26 bis 29 gezeigt ist.

Das Platzieren der Wälzkörper 17 auf den mit Halterungen 4, 8, 9, 10 versehenen Wätzkörperführungen 3 erfolgt durch Abziehen des planen Wälzkörperkäfigs 1 mit der Rakel 12. Eine alternative Möglichkeit des Platzierens der Wälzkörper 17 auf den Wälzkörperführungen 3 besteht darin, den Wälzkörperkäfig durch Rütteln in Schwingungen zu versetzen.

In einem weiteren Verfahrensschritt werden überschüssige Wälzkörper 17 von dem planen Wälzkörperkäfig entfernt. Dies geschieht bevorzugt ebenfalls durch Abziehen des Wälzkörperkäfigs mit der Rakel 12.

Wie besonders gut in den Figuren 27 und 29 zu erkennen ist, lagert sich ein Teil des Schmierstoffes an den Halterungen 4, 8, 9 und/oder den an den Wälzkörperführungen 3 vorgesehen Nuten oder Kammern 16 ab, so dass für die Schmierung der Wälzkörper stets ein Vorrat an Schmierstoff 13 verfügbar ist. Diese Kammern und/oder Nuten 16 sind außerdem so ausgebildet, dass der Schmierstoff zwischen der Außenseite 5 und der Innenseite 6 des Wälzkörperkäfigs 1 übertragbar ist.

Alle in den vorangegangenen Figuren gezeigten Ausführungsvarianten des Wälzkörperkäfigs sind auch in anderen als den hier gezeigten Kombinationen der Halterungen an oder in den Wälzkörperführungen 3 denkbar. Mit dem oben beschriebenen Aufbau des erfindungsgemäßen Wälzkörperkäfigs und dem erfindungsgemäßen Verfahren ist es ermöglicht, den Wälzkörperkäfig in einfacher Weise mit Wälzkörpern zu bestücken und anschließend auf einer Auszugsführungsschiene zu montieren.

### Bezugszeichenliste

| | |
|---|---|
| Wälzkörperkäfig | 1 |
| Seitenwand | 2 |
| Wälzkörperführung | 3 |
| Halterung | 4, 8, 9, 10 |
| Außenseite | 5 |
| Innenseite | 6 |
| Spalt | 7 |
| Laibung | 11 |
| Rakel | 12 |
| Schmierstoff | 13 |
| Abzieher | 14 |
| Schmierstoffkanäle | 15 |
| Nute/Kammer | 16 |
| Wälzkörper | 17 |
| Biegebereich | 18 |

## Patentansprüche

1. Wälzkörperkäfig (1) für eine Möbelauszugsführung, aufweisend
- mindestens zwei Seitenwände (2) mit Wälzkörperführungen (3),
- wobei die Seitenwände (2) entlang mindestens einer ihrer Längskanten durch mindestens einen Biegebereich (18) gegeneinander faltbar miteinander verbunden und
- an den Wälzkörperführungen (3) Halterungen (4, 8, 9, 10) vorgesehen sind, die derart angeformt sind, dass In einer planen Montagestellung des Wälzkörperkäfigs (1) Wälzkörper (17) in die Halterungen (4, 8, 9, 10) der Wälzkörperführungen (3) einpressbar sind, und
- die Halterungen (4, 8, 9, 10) als aus der Ebene des Wälzkörperkäfigs (1) in seiner planen Montagestellung hervorstehende Halteelemente oder kalottenförmig ausgebildet sind
**dadurch gekennzeichnet, dass**
- die Halterungen (4, 8, 9, 10) und/oder die Wälzkörperführungen (3) mit Nuten und/oder Kammern (16) ausgebildet sind, in denen ein an den Wälzkörpern (17) anhaftender Schmierstoff (13) lagerbar und zwischen der Außenseite (5) und der Innenseite (6) des Wälzkörperkäfigs (1) übertragbar ist und
- die Seitenwände (2) durch Rastmittel in einer Funktionsstellung verrastet sind.

2. Wälzkörperkäfig nach Anspruch 1, **dadurch gekennzeichnet, dass** jeweils zumindest eine Halterung (4, 8, 9) aus einem Randabschnitt der Wälzkörpernführungen (3) hervorsteht.

3. Wälzkörperkäfig nach Anspruch 2, **dadurch gekennzeichnet, dass** aus den Randabschnitten der Wälzkörperfühmngen (3) jeweils zwei Halterungen (4, 8, 9) hervorstehen, welche einander gegenüberliegend angeordnet sind.

4. Wälzkörperkäfig nach Anspruch 2 oder 3, **dadurch gekenntzeichnet, dass** die Halterung (4, 8, 9) aus einer Außenseite (5) und/oder einer Innenseite (6) des Wälzkörperkäfigs (1) hervorsteht.

5. Wälzkörperkäfig nach Anspruch 4, **dadurch gekennzeichnet, dass** jeweils eine der Halterungen (4, 8, 9) aus der Außenseite (5) und eine aus der Innenseite (6) des Wälzkörperkäfigs (1) hervorsteht, wobei die Halterungen (4, 8, 9) zueinander versetzt an unterschiedlichen Randabschnitten der Wälzkörperführungen (3) positioniert sind.

6. Wälzkörperkäfig nach Anspruch 5, **dadurch gekennzeichnet, dass** die Halterungen (9) taschenartig ausgebildet sind.

7. Wälzkörperkäfig nach einem der vorstehenden Ansprüche, **dadurch gekennzeichnet, dass** die Halterungen (4, 9) an einem Randabschnitt längs zur Laufrichtung der als Kugel ausgebildeten Wälzkörper (17) positioniert sind.

8. Wälzkörperkäfig nach einem der vorstehenden Ansprüche 1 bis 7, **dadurch gekennzeichnet, dass** die Halterungen (4) an einem Randabschnitt quer zur Laufrichtung der als Kugel oder Zylinder ausgebildeten Wälzkörper (17) positioniert sind.

9. Wälzkörperkäfig nach einem der Ansprüche 1 bis 2, **dadurch gekennzeichnet, dass** die Halterungen (8) als ringförmige Wulst ausgebildet sind.

10. Wälzkörperkäfig nach einem der Ansprüche 1 bis 2, **dadurch gekennzeichnet, dass** die Halterungen (10) als in einer Laibung (11) der Wälzkörperführungen (3) versetzt zueinander angeordnete Nasen ausgebildet sind.

11. Verfahren zur Montage eines Wälzkörperkäfigs (1) gemäß einem oder mehreren der vorstehenden Ansprüche auf ein Auszugsführungsschienenprofil, **gekennzeichnet durch** die folgenden Verfahrensschritte:
a. Ausbringen der Wälzkörper (17) auf den in der Montagestellung planen Wälzkörperkäfig (1),
b. Aufbringen eines Schmierstoffes (13) auf den planen Wälzkörperkäflg (1)
c. Platzieren der Wälzkörper (17) auf den mit Halterungen (4, 8, 9, 10) versehenen Wätzkörperführungen (3),
d. Einpressen der Wälzkörper (17) in die Wälzkörperführungen (3),
e. Montage des bestückten Wälzkörperkäfigs (1) auf ein Auszugsführungsschienenprofil **durch** Umklappen und Verrasten der Seitenwände (2) des Wälzkörperkäfigs (1).

12. Verfahren nach Anspruch 11, **dadurch gekennzeichnet, dass** das Aufbrlngen des Schmierstoffes (13) durch eine Rakel (12) erfolgt.

13. Verfahren nach einem der Ansprüche 10 bis 12, **dadurch gekennzeichnet, dass** das Platzieren der Wälzkörper (17) auf den mit Halterungen (4, 8, 9, 10) versehenen Wälzkörperführungen (3) durch Rütteln des Wälzkörperkäfigs (1) erfolgt.

14. Verfahren nach Anspruch 12, **dadurch gekennzeichnet, dass** das Platzieren der Wälzkörper (17) auf den mit Halterungen (4, 8, 9, 10) versehenen Wälzkörperführungen (3) durch Abziehen des planen Wälzkörperkäfigs (1) mit der Rakel (12) erfolgt.

15. Verfahren nach einem der Ansprüche 10 bis 14, **gekennzeichnet durch** den Verfahrensschritt:
e. Entfernen überschüssiger Wälzkörper (17) von dem planen Wälzkörperkäfig (1).

16. Verfahren nach Anspruch 15, **dadurch gekennzeichnet, dass** das Entfernen überschüssiger Wälzkörper (17) durch Abziehen des Wälzkörperkäfigs (1) mit der Rakel (12) erfolgt.

## Claims

1. Rolling body cage (1) for a furniture pull-out guide, having
- at least two side walls (2) with rolling body guides (3),
- wherein the side walls (2) are connected to one another along at least one of the longitudinal edges thereof in a manner such that they can be folded against one another by means of at least one bending region (18), and
- mounts (4, 8, 9, 10) are provided on the rolling body guides (3), said guides being integrally formed thereon in such a manner that, in a flat fitting position of the rolling body cage (1), rolling bodies (17) can be pressed into the mounts (4, 8, 9, 10) of the rolling body guides (3), and
- the mounts (4, 8, 9, 10) are designed as retaining elements which protrude out of the plane of the rolling body cage (1) in the flat fitting position thereof, or are of dome-shaped design,
**characterized in that**
- the mounts (4, 8, 9, 10) and/or the rolling body guides (3) are designed with grooves and/or chambers (16) in which a lubricant (13) adhering to the rolling bodies (17) can be stored and can be transmitted between the outer side (5) and the inner side (6) of the rolling body cage (1), and
- the side walls (2) are latched in a functional position by latching means.

2. Rolling body cage according to Claim 1, **characterized in that** at least one mount (4, 8, 9) protrudes in each case from an edge section of the rolling body guides (3).

3. Rolling body cage according to Claim 2, **characterized in that** two mounts (4, 8, 9), which are arranged opposite each other, protrude in each case from the edge sections of the rolling body guides (3).

4. Rolling body cage according to Claim 2 or 3, **characterized in that** the mount (4, 8, 9) protrudes from an outer side (5) and/or an inner side (6) of the rolling body cage (1).

5. Rolling body cage according to Claim 4, **characterized in that** in each case one of the mounts (4, 8, 9) protrudes from the outer side (5) and one from the inner side (6) of the rolling body cage (1), the mounts (4, 8, 9) being positioned in a manner offset with respect to one another on different edge sections of the rolling body guides (3).

6. Rolling body cage according to Claim 5, **characterized in that** the mounts (9) are of pocket-like design.

7. Rolling body cage according to one of the preceding claims, **characterized in that** the mounts (4, 9) are positioned on an edge section longitudinally with respect to the direction of movement of the rolling bodies (17), which are designed as balls.

8. Rolling body cage according to one of the preceding Claims 1 to 7, **characterized in that** the mounts (4) are positioned on an edge section transversely with respect to the direction of movement of the rolling bodies (17), which are designed as balls or cylinders.

9. Rolling body cage according to either of Claims 1 and 2, **characterized in that** the mounts (8) are designed as an annular bead.

10. Rolling body cage according to either of Claims 1 and 2, **characterized in that** the mounts (10) are designed as lugs which are arranged in an offset manner with respect to one another in a reveal (11) of the rolling body guides (3).

11. Method for fitting a rolling body cage (1) according to one or more of the preceding claims onto a pull-out guide rail profile, **characterized by** the following method steps:
a. bringing out the rolling rolling bodies (17) onto the rolling body cage (1) which is flat in the fitting position,
b. applying a lubricant (13) to the flat rolling body cage (1),
c. placing the rolling bodies (17) on the rolling body guides (3) which are provided with mounts (4, 8, 9, 10),
d. pressing the rolling bodies (17) into the rolling body guides (3),
e. fitting the equipped rolling body cage (1) onto a pull-out guide rail profile by folding over and latching the side walls (2) of the rolling body cage (1).

12. Method according to Claim 11, **characterized in that** the lubricant (13) is applied by a doctor blade (12).

13. Method according to one of Claims 10 to 12, **characterized in that** the rolling bodies (17) are placed on the rolling body guides (3), which are provided with mounts (4, 8, 9, 10), by shaking of the rolling body cage (1).

14. Method according to Claim 12, **characterized in that** the rolling bodies (17) are placed on the rolling body guides (3), which are provided with mounts (4, 8, 9, 10), by pulling off the flat rolling body cage (1) with the doctor blade (12).

15. Method according to one of Claims 10 to 14, **characterized by** the following method step:
e. removing excess rolling bodies (17) from the flat rolling body cage (1).

16. Method according to Claim 15, **characterized in that** excess rolling bodies (17) are removed by pulling off the rolling body cage (1) with the doctor blade (12).

## Revendications

1. Cage d'élément roulant (1) pour un guidage d'extraction de meuble, présentant :
- au moins deux parois latérales (2) avec des guidages d'élément roulant (3),
- les parois latérales (2) étant reliées entre elles de manière pliable l'une contre l'autre le long d'au moins l'une de leurs arêtes longitudinales par au moins une zone de pliage (18) et
- des fixations (4, 8, 9, 10) étant prévues sur les guidages d'élément roulant (3), lesquelles sont formées de telle manière que dans une position de montage plane de la cage d'élément roulant (1), des éléments roulants (17) puissent être enfoncés dans les fixations (4, 8, 9, 10) des guidages d'élément roulant (3), et
- les fixations (4, 8, 9, 10) étant réalisées comme des éléments de retenue dépassant du plan de la cage d'élément roulant (1) dans sa position de montage plane ou en forme de calotte,
**caractérisée en ce que**
- les fixations (4, 8, 9, 10) et/ou les guidages d'élément roulant (3) sont réalisés avec des rainures et/ou des chambres (16), dans lesquelles un lubrifiant (13) adhérant aux éléments roulants (17) peut être logé et peut être transmis entre le côté extérieur (5) et le côté intérieur (6) de la cage d'élément roulant (1) et
- les parois latérales (2) sont encliquetées par des moyens d'encliquetage dans une position fonctionnelle.

2. Cage d'élément roulant selon la revendication 1, **caractérisée en ce que** respectivement au moins une fixation (4, 8, 9) dépasse d'une section de bord des guidages d'élément roulant (3).

3. Cage d'élément roulant selon la revendication 2, **caractérisée en ce que** respectivement deux fixations (4, 8, 9) disposées à l'opposé, dépassent des sections de bord des guidages d'élément roulant (3).

4. Cage d'élément roulant selon la revendication 2 ou 3, **caractérisée en ce que** la fixation (4, 8, 9) dépasse d'un côté extérieur (5) et/ou d'un côté intérieur (6) de la cage d'élément roulant (1).

5. Cage d'élément roulant selon la revendication 4, **caractérisée en ce que** respectivement l'une des fixations (4, 8, 9) dépasse du côté extérieur (5) et l'une des fixations (4, 8, 9) dépasse du côté intérieur (6) de la cage d'élément roulant (1), les fixations (4, 8, 9) étant positionnées en déport l'une de l'autre sur différentes sections de bord des guidages d'élément roulant (3).

6. Cage d'élément roulant selon la revendication 5, **caractérisée en ce que** les fixations (9) sont réalisées en forme de poche.

7. Cage d'élément roulant selon l'une quelconque des revendications précédentes, **caractérisée en ce que** les fixations (4, 9) sont positionnées sur une section de bord longitudinalement au sens de marche des éléments roulants (17) réalisés comme des billes.

8. Cage d'élément roulant selon l'une quelconque des revendications 1 à 7, **caractérisée en ce que** les fixations (4) sont positionnées sur une section de bord transversalement au sens de marche des éléments roulants (17) réalisés comme des billes ou cylindres.

9. Cage d'élément roulant selon l'une quelconque des revendications 1 à 2, **caractérisée en ce que** les fixations (8) sont réalisées comme un bourrelet annulaire.

10. Cage d'élément roulant selon l'une quelconque des revendications 1 à 2, **caractérisée en ce que** les fixations (10) sont réalisées comme des nez disposés en déport les uns des autres dans une surface intérieure (11) des guidages d'élément roulant (3).

11. Procédé de montage d'une cage d'élément roulant (1) selon l'une ou plusieurs quelconques des revendications précédentes sur un profilé de rail de guidage d'extraction, **caractérisé par** les étapes de procédé suivantes :
a. épandage des éléments roulants (17) sur la cage d'élément roulant (1) plane dans la position de montage,
b. application d'un lubrifiant (13) sur la cage d'élément roulant plane (1),
c. placement des éléments roulants (17) sur les guidages d'élément roulant (3) pourvus de fixations (4, 8, 9, 10),
d. enfoncement des éléments roulants (17) dans les guidages d'élément roulant (3),
e. montage de la cage d'élément roulant (1) équipée sur un profilé de rail de guidage d'extraction par rabattement et encliquetage des parois latérales (2) de la cage d'élément roulant (1).

12. Procédé selon la revendication 11, **caractérisé en ce que** l'application de lubrifiant (13) est effectuée par une racle (12).

13. Procédé selon l'une quelconque des revendications 10 à 12, **caractérisé en ce que** le placement des éléments roulants (17) sur les guidages d'élément roulant (3) pourvus de fixations (4, 8, 9, 10) est effectué par secouage de la cage d'élément roulant (3).

14. Procédé selon la revendication 12, **caractérisé en ce que** le placement des éléments roulants (17) sur les guidages d'élément roulant (3) pourvus de fixations (4, 8, 9, 10) est effectué par levée de la cage d'élément roulant plane (1) avec la racle (12).

15. Procédé selon l'une quelconque des revendications 10 à 14, **caractérisé par** l'étape de procédé suivante :
e. écartement des éléments roulants (17) excédentaires de la cage d'élément roulant (1).

16. Procédé selon la revendication 15, **caractérisé en ce que** l'écartement des éléments roulants (17) excédentaires est effectué par levée de la cage d'élément roulant (1) avec la racle (12).
